# EUROPEAN PATENT APPLICATION

(11) **EP 4 738 802 A1**
(43) Date of publication of application: **06.05.2026**
(21) Application number: 24835157.9
(22) Date of filing: 23.05.2024
(51) Int. Cl.: H04M 1/72403, H04L 9/40, H04W 4/16

(54) **APPLICATION INTERACTION METHOD IN CALL PROCESS, AND COMPUTER DEVICE AND STORAGE MEDIUM**

(30) Priority: 03.07.2023 CN 202310810128
(71) Applicant: ZTE CORPORATION, Shenzhen, Guangdong 518057 (CN)
(72) Inventor: HAN, Zhongzhang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/094858
(87) International publication number: WO 2025/007672

(57) **Abstract**

The present application relates to the technical field of network communications, and particularly relates to an application interaction method in a call process, and a computer device and a storage medium. The method comprises: acquiring an application program list, wherein the application program list includes at least one application program which is supported by a communication network; on the basis of the application program list and a received configuration operation, performing personalized application program configuration on at least one target called end; and sending a call request to the at least one target called end, such that the at least one target called end loads respective corresponding application programs on the basis of the call request, wherein the call request includes personalized configuration information corresponding to application programs of the target called end.

## Description

### CROSS-REFERENCE TO RELATED APPLICATIONS

The present application claims priority to Chinese patent application No. 202310810128.3, filed to the CNIPA on July 3, 2023, and entitled "APPLICATION INTERACTION METHOD IN CALL PROCESS, COMPUTER DEVICE AND STORAGE MEDIUM", the entire content of which is incorporated herein by reference.

### TECHNICAL FIELD

Embodiments of the present application relate to the technical field of network communications, in particular to an application interaction method in a call process, a computer device, and a storage medium.

### BACKGROUND

A 5G new call refers to carrying of a new IP multimedia subsystem (IMS) data channel (DC) on the basis of a Voice over NR (VoNR) video and audio call. Then, based on the high-definition audio and video call, any multimedia information may be synchronously transmitted through the IMS DC, thereby upgrading a real-time call to a real-time interactive and immersive call.

At present, the 5G new call is still in a process of pre research and development. A new call service mainly provides a fixed interactive content in the presentation level, and the flexibility of interaction is low, resulting in a poor user experience.

### SUMMARY

Embodiments of the present application provide an application interaction method in a call process, a computer device and a storage medium. The technical solutions are as follows.

In an aspect, an application interaction method in a call process is provided. The method is performed by a calling end and includes: acquiring an application list, wherein the application list includes at least one application supported by a communication network; performing personalized application configuration on at least one target called end based on the application list and a received configuration operation; and sending a call request to the at least one target called end, such that the at least one target called end loads a corresponding application based on the call request respectively, wherein the call request includes personalized application configuration information corresponding to the target called end.

In another aspect, a computer device is provided. The computer device includes a processor and a memory, the memory stores at least one computer program, and the at least one computer program is loaded and executed by the processor to implement the above application interaction method in the call process.

In another aspect, a computer-readable storage medium is provided. The computer-readable storage medium has at least one computer program stored thereinto, and the computer program is loaded and executed by a processor to implement the above application interaction method in the call process.

In another aspect, a computer program product is provided. The computer program product includes at least one computer program, and the computer program is loaded and executed by a processor to implement the application interaction method in the call process provided in various optional implementations above.

### BRIEF DESCRIPTION OF DRAWING(S)

Accompanying drawings here, which are incorporated in and constitute a part of this specification, illustrate embodiments consistent with the present application and together with the specification, serve to explain the principles of the present application.
FIG. 1 shows a schematic structural diagram of an interaction system corresponding to an application interaction method in a call process provided by an exemplary embodiment of the present application.
FIG. 2 shows a flowchart of an application interaction method in a call process provided by an exemplary embodiment of the present application.
FIG. 3 shows a flowchart of an application interaction method in a call process provided by an exemplary embodiment of the present application.
FIG. 4 shows a flowchart of an application interaction method in a call process provided by an exemplary embodiment of the present application.
FIG. 5 shows a schematic diagram of an interaction between a calling end and a communication network provided by an exemplary embodiment of the present application.
FIG. 6 shows a schematic diagram of an application configuration process provided by an exemplary embodiment of the present application.
FIG. 7 shows a schematic diagram of a call interaction establishment process provided by an exemplary embodiment of the present application.
FIG. 8 shows a schematic diagram of a call interface provided by an exemplary embodiment of the present application.
FIG. 9 shows a structural block diagram of a computer device shown by an exemplary embodiment of the present application.

### DETAILED DESCRIPTION

Exemplary embodiments will be illustrated in detail here, examples of which are represented in accompanying drawings. When the following descriptions refer to the accompanying drawings, the same number in the different accompanying drawings represents the same or similar elements unless otherwise indicated. Implementations described in the following exemplary embodiments do not represent all implementations consistent with the present application. On the contrary, they are merely examples of methods consistent with some aspects of the present application as detailed in the appended claims.

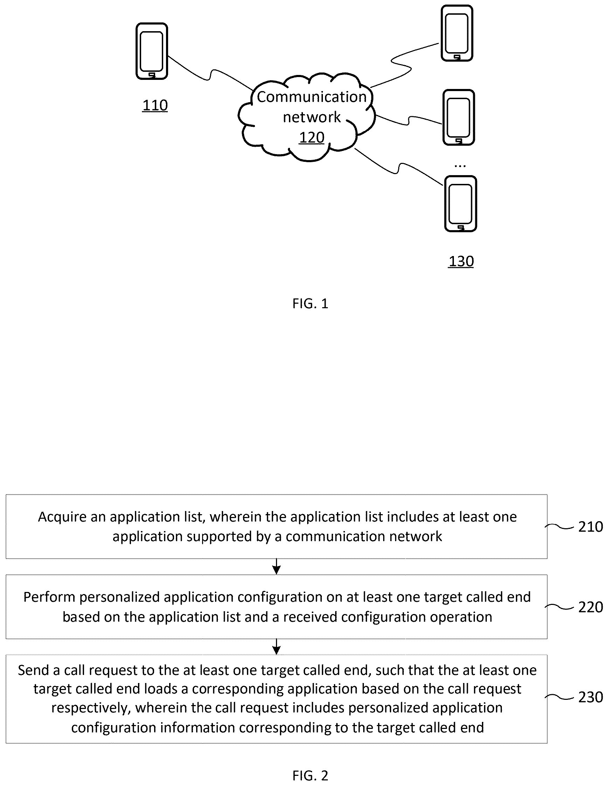

In a process of a 5G new call, different types of call service entities may have different usage requirements for new call functions. For example, the elderly may need services such as content sharing and screen sharing, while business groups may need services such as intelligent translation. To address potential requirements, the present application provides an application interaction method in a call process which has a design for providing differentiated new call services for different types of objects, improves flexibility of a combination form of the new call services and provides a better user experience. FIG. 1 shows a schematic structural diagram of an interaction system corresponding to an application interaction method in a call process provided by an exemplary embodiment of the present application. As shown in FIG. 1, the interaction system includes a calling end 110, a communication network 120, and a called end 130.

The above calling end 110 may be a terminal device with an interaction function, and the terminal device may be implemented as a smartphone, a smartwatch, etc. In the embodiment of the present application, the calling end may autonomously configure an expected program list for different contact objects, and send a call request to the called end corresponding to each contact so that the called end loads a corresponding application, which facilitates an interaction between the calling end and the called end based on the loaded application.

In a peer-to-peer (P2P) scenario, the above called end 130 may be a terminal device with an interaction function, such as a scenario of a call between terminals. In a peer-to-asset (P2A) scenario, the above called end 130 may be a message platform, such as a scenario of a call between a terminal and an intelligent robot.

The communication network 120 may be implemented as a core network, and the communication network stores at least one supported application thereinto. The application stored in the communication network may be uploaded to the communication network by an end user, or the application stored in the communication network may also be uploaded to the communication network by other authorized parties. This communication network may send, when receiving an application list acquiring request sent by the terminal, a retrieved application list to the terminal through a bootstrap data channel (BDC) established between the communication network and the terminal, so that a user can use the application list.

Based on the application interaction system shown in FIG. 1, an embodiment of the present application provides an application interaction method in a call process. FIG. 2 shows a flowchart of the application interaction method in the call process provided by an exemplary embodiment of the present application. The method is performed by a calling end, and the calling end may be implemented as a terminal device. As shown in FIG. 2, the application interaction method in the call process may include the following steps.

At step 210, an application list is acquired, wherein the application list includes at least one application supported by a communication network.

In the embodiment of the present application, the at least one application may be application software installed on a terminal; or, the at least one application may be an applet, namely, a program that depends on a host program to run; or, the at least one application may include both the application software and the applet, and the present application does not limit an implementation form of the application.

The application list may be acquired by the calling end from the communication network, or the application list may be acquired by the calling end from a local storage, in which case at least one application list supported by the communication network is pre-stored in the local storage.

At step 220, personalized application configuration is performed on at least one target called end based on the application list and a received configuration operation.

In the embodiment of the present application, the calling end may set different applications for different target called ends based on the received configuration operation, each target called end may be configured with one or more applications correspondingly, the numbers of the applications corresponding to the different target called ends may be the same or different, and the applications corresponding to the different target called ends may be partially the same or may be different. In addition, in some possible cases, among the plurality of target called ends configured by the calling end, some of the target called ends may have the same corresponding applications. Illustratively, a called end-application configuration interface may be displayed in the calling end, and various applications in the application list and called ends that to be subjected to personalized application configuration may be displayed in the configuration interface, so that a user of the calling end performs personalized application configuration on each called end. In the embodiment of the present application, a called end configured with a personalized application is referred to as the target called end. Alternatively, the calling end may also perform the personalized application configuration on the called end based on a received speech configuration instruction. Illustratively, this process may be implemented as follows: the calling end receives speech information, performs speech recognition on the speech information to obtain the speech configuration instruction, and performs the personalized application configuration on each called end based on a configuration method indicated by the speech configuration instruction.

At step 230, a call request is sent to the at least one target called end, such that the at least one target called end loads a corresponding application respectively based on the call request, wherein the call request includes personalized application configuration information corresponding to the target called end.

The call request may be a call request initiated by the calling end to the target called end through a communication number, or may be a call request initiated by the calling end to the target called end through a virtual number, or may be a call request initiated by the calling end to the target called end through an application with a call function, which is not limited in the present application.

When the target called end receives the call request sent by the calling end, the call request is parsed to acquire the personalized configuration information which is configured by the calling end for the target called end, and the corresponding application is loaded in response to the personalized configuration information, so as to perform an application interaction with the calling end based on the loaded application. Because the calling end performs different personalized application configurations on the different target called ends, the applications loaded by the different target called ends in response to the call request of the calling end may be partially the same or may be different. In addition, in some possible cases, the applications loaded by some of the different target called ends may be the same.

In summary, the embodiment of the present application provides the application interaction method in the call process. Before establishing a call connection, the calling end may acquire the application list supported by the communication network, and perform the personalized application configuration on the at least one target called end based on applications in the application list, such that the application configured for the target called end is more in line with needs of an interaction between the calling end and the target called end. When the calling end sends the call request to the at least one target called end, the call request may include the personalized application configuration information corresponding to the target called end, such that the at least one target called end may load the corresponding applications based on the personalized configuration information in the call request respectively, thus, personalized application loading can be achieved in different target called ends, and then a personalized application interaction between the calling end and the target called end can be achieved.

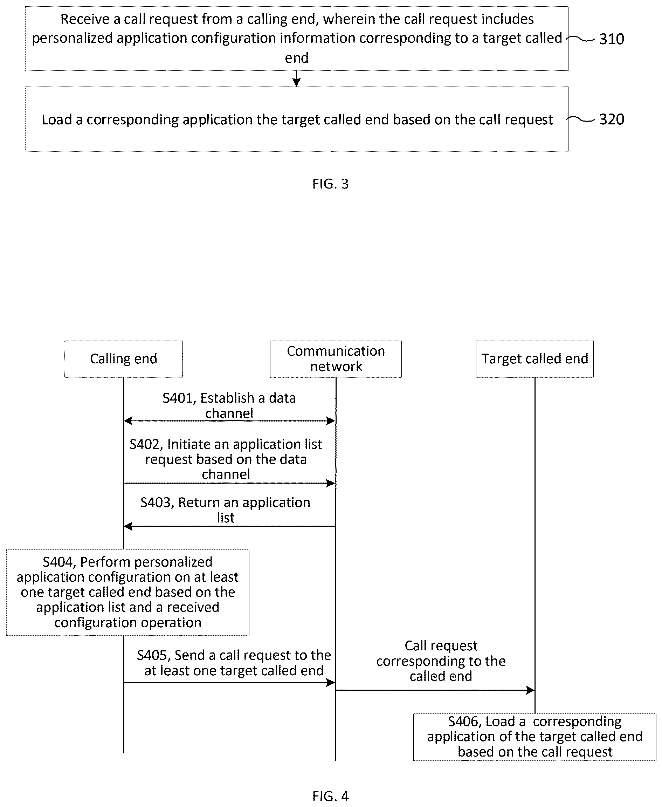

FIG. 3 shows a flowchart of an application interaction method in a call process provided by an exemplary embodiment of the present application. The method may be executed by a target called end, and the target called end is at least one of called ends on which a calling end performs personalized application configuration. As shown in FIG. 3, the application interaction method in the call process may include the following steps.

At step 310, a call request sent by the calling end is received, wherein the call request includes personalized application configuration information corresponding to the target called end.

The personalized application configuration information corresponding to the target called end and included in the call request may be generated after the calling end acquires an application list supported by a communication network and performs the personalized application configuration on the target called end based on the application list.

At step 320, a corresponding of the target called end is loaded based on the call request.

In summary, the embodiment of the present application provides the application interaction method in the call process. Before establishing a call connection, the calling end may acquire the application list supported by the communication network, and perform the personalized application configuration on the at least one target called end based on the applications in the application list, such that the application configured for the target called end is more in line with needs of the interaction between the calling end and the target called end. When the calling end sends the call request to the at least one target called end, the call request may include the personalized application configuration information corresponding to the target called end, such that the at least one target called end may load the corresponding applications based on the personalized configuration information in the call request respectively, thus, personalized application loading can be achieved in different target called ends, and then a personalized application interaction between the calling end and the target called end can be achieved.

Taking an example that the calling end acquires the application list from the communication network, FIG. 4 shows a flowchart of an application interaction method in a call process provided by an exemplary embodiment of the present application. The method may be performed interactively by a calling end, a communication network, and a target called end. As shown in FIG. 4, the application interaction method in the call process may include the following steps.

At S401, the calling end establishes a data channel with the communication network.

In order to acquire the application list, an interaction between the calling end and the communication network is involved at a data channel registration stage of a terminal, so as to facilitate the terminal that supports a data channel (DC) capability and completes a DC registration to timely acquire the application list supported by the communication network.

At S402, an application list request is initiated to the communication network based on the data channel, wherein the application list request includes terminal information of the calling end, and correspondingly, the communication network receives the application list request.

After receiving the application list request, the communication network may pull the corresponding application list from a corresponding repository of the communication network to send the same to the calling end.

At S403, the communication network returns the application list to the calling end, and correspondingly, the calling end receives the application list returned by the communication network based on the application list request.

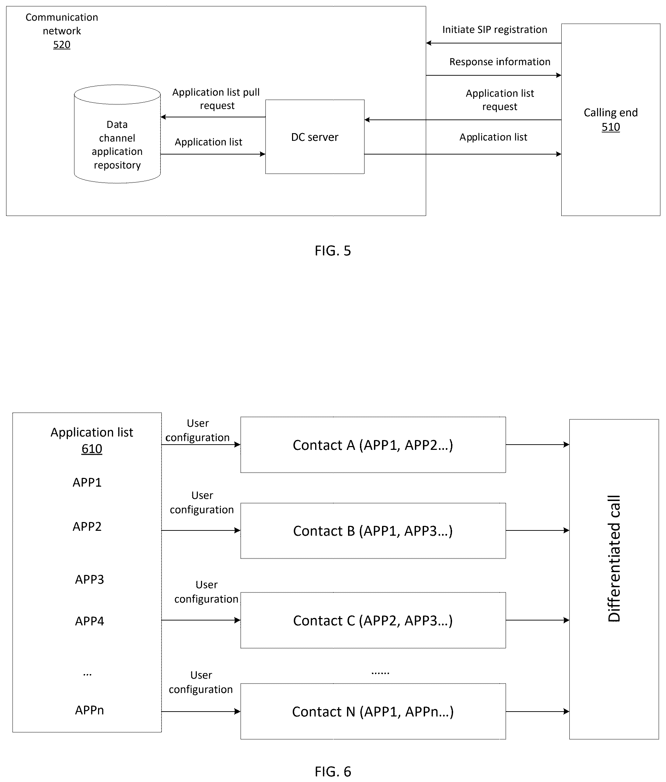

In the embodiment of the present application, the calling end initiates a data channel registration request to the communication network. When the calling end receives response information, if the response information includes a target identification field, it is determined that the data channel between the calling end and the communication network is successfully established. FIG. 5 shows a schematic diagram of an interaction between the calling end and the communication network provided by an exemplary embodiment of the present application. As shown in FIG. 5, the calling end 510 initiates a session initiation protocol (SIP) registration to the communication network 520. After receiving the response information fed back from the communication network, if the identification field in Feature-Caps of the SIP registration response information is +sip.app-subtype="webrtc-datachannel", it is determined that the DC registration is successful. The calling end 510 initiates the application list request to the communication network 520, and a DC server in the communication network 520 initiates an application list pull request to a data channel application repository. The data channel application repository returns the application list to the DC server in response to the request, and then the DC server returns the application list to the calling end 510. Correspondingly, the calling end receives the application list and caches the same for a user to perform personalized application configuration on different contacts subsequently.

At S404, the calling end performs personalized application configuration on at least one target called end based on the application list and a received configuration operation.

In the embodiment of the present application, different target called ends may be configured with different application groups correspondingly, the application group may include one or more applications, the different application groups may be implemented as a combination of different applications, and the number and types of the applications included in the different application groups may be subjected to personalized configuration based on the configuration operation, which is not limited in the present application. Illustratively, for a target called end 1, an application group 1 may be configured, and the application group 1 may include an application 1 and an application 2. For a target called end 2, an application group 2 may be configured, and the application group 2 may include an application 1, an application 3, an application 4, and so on.

FIG. 6 shows a schematic diagram of an application configuration process provided by an exemplary embodiment of the present application. As shown in FIG. 6, an application list 610 provides at least one application supported by the communication network. When the calling end receives a configuration operation of a user, personalized application configuration is performed respectively for different contacts (i.e., the target called ends) based on the configuration operation of the user, such that when the user makes a call to the contacts, differentiated calls may be made based on the applications subjected to the personalized configuration.

In one embodiment, in order to improve efficiency of the personalized configuration, different called end groups may be divided in the calling end, and the target called ends in the same called end group have the same attributes. Illustratively, the target called ends in the same called end group may have the same label, and the label may be a label customized by the user, such as a customer, a friend, and family. The target called ends having the same attributes usually have the same or similar interaction requirements. Therefore, the calling end may perform the personalized application configuration on each target called end group based on the application list and the received configuration operation, so as to achieve batch personalized application configuration on the target called ends and improve the efficiency of the personalized configuration of the target called ends.

In one embodiment, the calling end may also acquire application configuration data, perform statistical analysis on the application configuration data, and acquire a plurality of pre-configured application groups. Optionally, the pre-configured application groups may be further provided with applicable labels to indicate configuration objects applicable to the application groups. When the user performs application configuration, the pre-configured application groups and corresponding applicable labels may be displayed for user' reference, thereby reducing the operation and time required for the user to screen the applications and improving the configuration efficiency of the applications.

At S405, the calling end sends a call request to the at least one target called end, and correspondingly, the at least one target called end receives the call request sent by the calling end.

In the embodiment of the present application, the calling end initiates the call request to the at least one target called end through the communication network, and correspondingly, the at least one target called end receives the corresponding call request.

The call request carries a negotiation request for a bootstrap data channel (BDC), and the negotiation request is preloaded with personalized application configuration information corresponding to the target called end.

When a call interaction is established between the calling end and the target called end, the method further includes that the calling end receives an interaction result which is sent by the target called end based on the personalized application configuration information; and when the interaction result indicates that the target called end receives a loading consent operation, the BDC between the communication network and the target called end is established so as to perform an application interaction through the BDC.

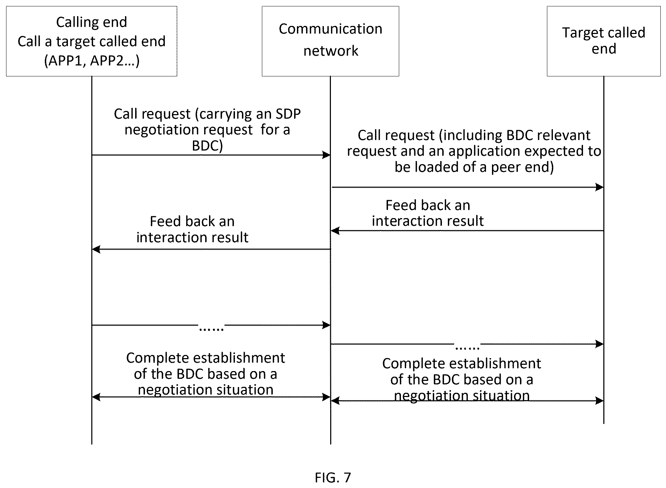

Taking an example that the calling end initiates the call request to one target called end, FIG. 7 shows a schematic diagram of a call interaction establishment process provided by an exemplary embodiment of the present application. As shown in FIG. 7, in this process, the calling end sends a call request INVITE to the target called end through the communication network. The call request carries a session description protocol (SDP) negotiation request for the BDC, and the negotiation request synchronously carries the preloaded personalized application configuration information corresponding to the target called end. The target called end acquires a relevant request for learning the BDC in the call request from the communication network, and learns an application expected to be loaded by the calling end. The application expected to be loaded is displayed in a display interface of the target called end through a user interface (Ul) interactive screen, an interaction result is generated based on the received user operation, and the interaction result is returned to the calling end through the communication network. When the interaction result indicates that the target called end receives the loading consent operation, the BDC between the communication network and the target called end is established, so as to achieve an application interaction between the calling end and the target called end based on a BDC between the calling end and the communication network and a BDC between the target called end and the communication network. The interaction result may be transmitted in a form of corresponding interaction signaling. Illustratively, the interaction signaling may be 183 signaling.

At S406, the target called end loads the application corresponding to the target called end based on the call request.

Optionally, when an application loading condition is met, the target called end loads the corresponding application based on the call request.

When the target called end is a terminal, the application loading condition includes: the target called end has an application loading environment, and the target called end receives a loading consent operation; or, when the target called end is a message platform, the application loading condition includes: the target called end has the application loading environment.

That is, when the target called end is the terminal, the implementation process of loading the corresponding application based on the call request includes that: when the target called end has the application loading environment, a loading confirmation control is displayed, wherein the loading confirmation control includes information about a to-be-loaded application confirmed based on the call request; and when the loading consent operation is received based on the loading confirmation control, the corresponding application is loaded.

In one embodiment, the target called end selects all or part of the applications configured by the calling end for the target called end based on a received selection operation, so as to load all or part of the applications configured by the calling end during the call interaction. In this case, the loading confirmation control further includes selection sub-controls corresponding to to-be-loaded applications respectively. The target called end receives selection operations based on for the selection sub-controls, and when the loading consent operation is received based on the loading confirmation control, loads an application corresponding to a selected selection sub-control. Illustratively, if the application group subjected to the personalized configuration by the calling end for the target called end includes 5 applications, after acquiring the pre-configured applications of the calling end from the call request, the target called end may select applications that are consented to be loaded based on the sub-controls in the loading confirmation control. For example, the sub-controls of 3 out of the 5 applications are selected and fed back to the calling end to load these 3 applications for the interaction through the loaded applications when establishing a call interaction.

The target called end having the application loading environment may refer to that the target called end has a corresponding application installed thereinto, or has a basis that supports loading of the application. When the target called end is the terminal, it indicates that an interaction scenario at this time is a P2P scenario, and the application interaction between the two requires a consent of a called user of the target called end to obtain a user authorization. When the target called end is the message platform, it indicates that the interaction scenario at this time is a P2A scenario, the message platform is a service provider, and in a case where the message platform has the application loading environment, corresponding application loading may be performed to provide a service to a calling end user.

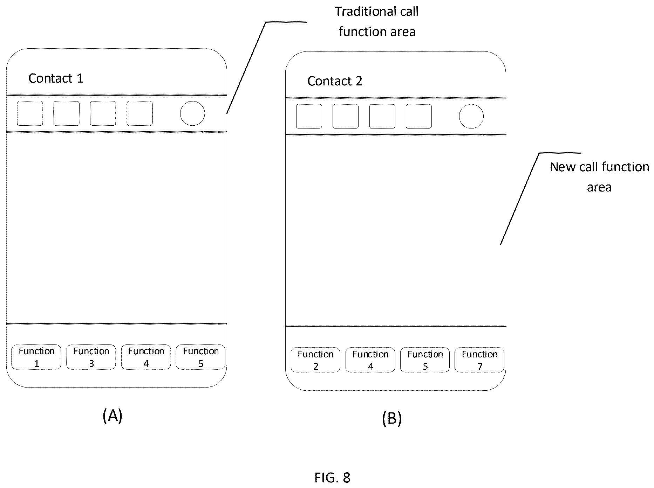

When the target called end meets the application loading condition, FIG. 8 shows a schematic diagram of a call interface provided by an exemplary embodiment of the present application. Part A in FIG. 8 is a call interface 1 of a target called end 1 corresponding to a contact 1, and part B in FIG. 8 is a call interface 2 of a target called end 2 corresponding to a contact 2. As shown in FIG. 8, in a 5G new call scenario, a new call function area is displayed in the call interface while retaining a traditional call function. The application configured corresponding to the calling end relative to the target called end 1 in the call interface 1 displays an application combination of a function 1, a function 3, a function 4, and a function 5, while the application configured corresponding to the calling end relative to the target called end 2 in the call interface 2 displays an application combination of a function 2, a function 4, a function 5, and a function 7. It should be noted that a display form of the call interface shown in FIG. 8 is only illustrative. Based on different settings, display positions of the application combinations may be different, which is not limited in the present application.

In summary, the embodiment of the present application provides the application interaction method in the call process. Before establishing a call connection, the calling end may acquire the application list supported by the communication network, and perform the personalized application configuration on the at least one target called end based on the applications in the application list, such that the application configured for the target called end is more in line with needs of the interaction between the calling end and the target called end. When the calling end sends the call request to the at least one target called end, the call request may include the personalized application configuration information corresponding to the target called end, such that the at least one target called end may load the corresponding applications based on the personalized configuration information in the call request respectively, thus, personalized application loading can be achieved in different target called ends, and then a personalized application interaction between the calling end and the target called end can be achieved.

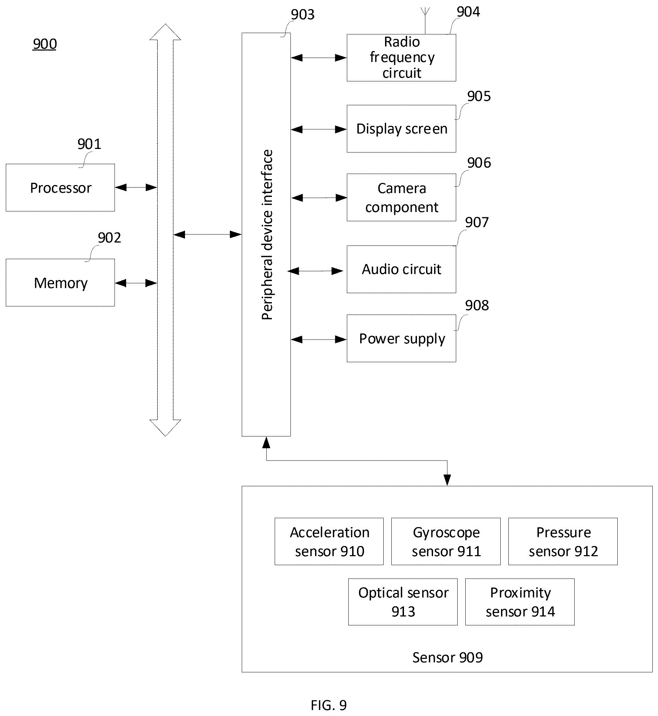

FIG. 9 shows a structural block diagram of a computer device 900 shown by an exemplary embodiment of the present application. The computer device 900 may be implemented as a calling end or a target called end mentioned above.

Usually, the computer device 900 includes: a processor 901 and a memory 902.

The processor 901 may include one or more processing cores, such as a 4-core processor and a 9-core processor. The processor 901 may be implemented in at least one hardware form of digital signal processing (DSP), a field-programmable gate array (FPGA), and a programmable logic array (PLA). The processor 901 may also include a main processor and a coprocessor. The main processor is a processor configured to process data in a wakeup state, also known as a central processing unit (CPU); and the coprocessor is a low-power processor for processing data in a standby mode. In some embodiments, the processor 901 may be integrated with a graphics processing unit (GPU). The GPU is configured to be responsible for rendering and drawing content that needs to be displayed on a display screen. In some embodiments, the processor 901 may further include an artificial intelligence (Al) processor, and the Al processor is configured to process a computing operation related to machine learning.

The memory 902 may include one or more computer-readable storage media. The computer-readable storage medium may be non-transient. The memory 902 may further include a highspeed random access memory and a nonvolatile memory, such as, one or more disk storage devices or flash storage devices. In some embodiments, the non-transient computer-readable storage medium in the memory 902 is configured to store at least one instruction, and the at least one instruction is used to be executed by the processor 901 to implement all or part of the steps of the application interaction method in the call process shown in method embodiments in the present application.

In some embodiments, the computer device 900 further optionally includes: a peripheral device interface 903 and at least one peripheral device. The processor 901, the memory 902 and the peripheral device interface 903 may be connected through a bus or a signal line. Each peripheral device may be connected with the peripheral device interface 903 through a bus, a signal line or a circuit board. Specifically, the peripheral device includes at least one of a radio frequency circuit 904, a display screen 905, a camera component 906, an audio circuit 907, and a power supply 908.

In some embodiments, the computer device 900 further includes one or more sensors 909. The one or more sensors 909 include but not limited to: an acceleration sensor 910, a gyroscope sensor 911, a pressure sensor 912, an optical sensor 913 and a proximity sensor 914.

Those skilled in the art may understand that a structure shown in FIG. 9 constitutes no limitation on the computer device 900, and the computer device may include more or fewer components than those shown in the figure, or combine some components, or adopt different component arrangements.

In an exemplary embodiment, a computer-readable storage medium is further provided. The computer-readable storage medium stores at least one computer program therein, and the computer program is loaded and executed by a processor to implement all or part of the steps in the application interaction method in the call process above. For example, the computer-readable storage medium may be a read-only memory (ROM), a random access memory (RAM), a compact disc read-only memory (CD-ROM), a magnetic tape, a floppy disk, an optical data storage device and the like.

In an exemplary embodiment, a computer program product is further provided. The computer program product includes at least one computer program, and the computer program is loaded by a processor and executes all or part of the steps of the application interaction method in the call process shown in any embodiment of FIG. 2, FIG. 3, or FIG. 4 above.

Those skilled in the art will easily figure out other implementation solutions of the present application after considering the specification and practicing the invention disclosed here. The present application intends to cover any transformation, usage or adaptive change of the present application, and these transformations, usages or adaptive changes conform to a general principle of the present application and include common general knowledge or conventional technical means in the technical field not disclosed by the present application. The specification and the embodiments are merely regarded as being for example, and the true scope and spirit of the present application are indicated by the claims.

It will be appreciated that the present application is not limited to the exact structure that has been described above and shown in the accompanying drawings, and various modifications and changes may be made without departing from the scope of the present application. The scope of the present application is limited merely by the appended claims.

## Claims

1. An application interaction method in a call process, performed by a calling end, comprising:
acquiring an application list, wherein the application list comprises at least one application supported by a communication network;
performing personalized application configuration on at least one target called end based on the application list and a received configuration operation; and
sending a call request to the at least one target called end, such that the at least one target called end loads a corresponding application based on the call request respectively, wherein the call request comprises personalized application configuration information corresponding to the target called end.

2. The method according to claim 1, wherein acquiring the application list comprises:
establishing a data channel with the communication network;
initiating an application list request to the communication network based on the data channel, wherein the application list request comprises terminal information of the calling end; and
receiving the application list which is returned by the communication network based on the application list request.

3. The method according to claim 1, wherein sending the call request to the at least one target called end, such that the at least one target called end loads the corresponding application based on the call request respectively comprises:
sending the call request to the at least one target called end, such that in response to that an application loading condition is met, the at least one target called end loads the corresponding application based on the call request;wherein, upon the condition that the target called end is a terminal, the application loading condition comprises: the target called end having an application loading environment, and the target called end receiving a loading consent operation; or, upon the condition that the target called end is a message platform, the application loading condition comprises: the target called end having an application loading environment.

4. The method according to claim 3, wherein the call request carries a negotiation request for a bootstrap data channel called BDC, the negotiation request is preloaded with the personalized application configuration information corresponding to the target called end, and the method further comprises:
receiving an interaction result which is sent by the target called end based on the personalized application configuration information; and
establishing, upon the condition that the interaction result indicates that the target called end receives a loading consent operation, the BDC between the communication network and the target called end so as to perform an application interaction through the BDC.

5. An application interaction method in a call process, performed by a target called end, wherein the target called end is at least one of called ends on which a calling end performs personalized application configuration, and the method comprises:
receiving a call request from the calling end, wherein the call request comprises personalized application configuration information corresponding to the target called end; and
loading a corresponding application of the target called end based on the call request.

6. The method according to claim 5, wherein upon the condition that the target called end is a message platform, loading the corresponding application of the target called end based on the call request comprises:
loading, in response to that the target called end has an application loading environment, the corresponding application based on the call request.

7. The method according to claim 5, wherein upon the condition that the target called end is a terminal, loading the corresponding application based on the call request comprises:
displaying, in response to that the target called end has an application loading environment, a loading confirmation control, wherein the loading confirmation control comprises information of a to-be-loaded application which is confirmed based on the call request; and
loading, in response to that a loading consent operation is received based on the loading confirmation control, the corresponding application.

8. The method according to claim 7, wherein the loading confirmation control further comprises selection sub-controls corresponding to to-be-loaded applications respectively; and
loading, in response to that the loading consent operation is received based on the loading confirmation control, the corresponding application comprises:
receiving selection operations for the selection sub-controls; and
loading, in response to that the loading consent operation is received based on the loading confirmation control, an application corresponding to a selected selection sub-control.

9. A computer device, comprising a processor and a memory, wherein the memory stores at least one computer program, and the at least one computer program is loaded and executed by the processor to implement the application interaction method in the call process according to any one of claims 1 to 8.

10. A computer-readable storage medium, having at least one computer program stored thereinto, wherein the computer program is loaded and executed by a processor to implement the application interaction method in the call process according to any one of claims 1 to 8.
